# EUROPEAN PATENT APPLICATION

(11) **EP 3 438 569 A1**
(43) Date of publication of application: **06.02.2019**
(21) Application number: 17775608.7
(22) Date of filing: 31.03.2017
(51) Int. Cl.: F25B 21/00

(54) **HEAT EXCHANGER AND MAGNETIC HEAT PUMP DEVICE**

(30) Priority: 31.03.2016 JP 2016073403; 30.05.2016 JP 2016107635
(71) Applicant: Fujikura, Ltd., Tokyo 135-8512 (JP)
(72) Inventor: UENO, Kota, Sakura-shi Chiba 285-8550 (JP); TAKEUCHI, Katsuhiko, Sakura-shi Chiba 285-8550 (JP); KONDO, Masahiro, Sakura-shi Chiba 285-8550 (JP); NOMURA, Ryujiro, Sakura-shi Chiba 285-8550 (JP); KIZAKI, Takeshi, Sakura-shi Chiba 285-8550 (JP); ISHIKAWA, Kohki, Sakura-shi Chiba 285-8550 (JP)
(74) Representative: Ter Meer Steinmeister & Partner
(86) International application number: PCT/JP2017/013809
(87) International publication number: WO 2017/171077

(57) **Abstract**

Provided is a heat exchanger 10 including: wires 121 formed of a magnetocaloric material having a magnetocaloric effect; and a case 13 filled with the wires 121, wherein a wire diameter of the wire 121 is smaller than 1 mm. According to the invention, it is possible to provide a heat exchanger capable of improving a heat exchange efficiency without causing an increase in size of a device.

## Description

### TECHNICAL FIELD

The present invention relates to a heat exchanger and a magnetic heat pump device including a wire formed of a magnetocaloric material.

For designated countries that are permitted to be incorporated by reference in the literature, the contents described in Japanese Patent Application No. 2016-073403 filed in Japan on March 31, 2016 and Japanese Patent Application No. 2016-107635 filed in Japan on May 30, 2016 are incorporated herein by reference and are regarded as a part of the description of this specification.

### BACKGROUND ART

As a heat exchanger including a magnetic body having a magnetocaloric effect, a heat exchanger is known in which a plurality of granular magnetic bodies formed of a magnetocaloric material are inserted into a tubular case (for example, see Patent Document 1).

### CITATION LIST

### PATENT DOCUMENT

Patent Document 1: JP 2010-77484 A

### SUMMARY OF THE INVENTION

### PROBLEM TO BE SOLVED BY THE INVENTION

In the heat exchanger described in Patent Document 1, the granular magnetic bodies are used as the magneto caloric material. As to such granular magnetic bodies, since a contact area with a heat exchange medium increases when a particle diameter decreases, a heat exchange efficiency increases to a certain degree. However, when the particle diameter further decreases, a flow of the heat exchange medium is disturbed and thus the heat exchange efficiency is deteriorated. For that reason, there is a limitation in improvement of the heat exchange efficiency when the granular magnetic bodies are used.

Meanwhile, in the heat exchanger using the magneto caloric material, the heat exchange efficiency can be improved by increasing the strength of a magnetic field applied to the magnetocaloric material. However, in order to increase the strength of the magnetic field, a magnet to be used needs to be increased in size, thus a problem that a device increases in size on the whole arises.

An object of the invention is to provide a heat exchanger and a magnetic heat pump device capable of improving a heat exchange efficiency without causing an increase in size of a device.

### MEANS FOR SOLVING PROBLEM

[1] A heat exchanger according to the invention is a heat exchanger including: wires formed of a magnetocaloric material having a magnetocaloric effect; and a case filled with the wires, in which a wire diameter of the wire is smaller than 1 mm.
[2] In the invention, the wire diameter of the wire may be equal to or larger than 0.1 mm and smaller than 1 mm.
[3] In the invention, the wires may be twisted and filled in the case as stranded wires.
[4] A magnetic heat pump device according to the invention includes the above-described heat exchanger.

### EFFECT OF THE INVENTION

According to the invention, since a wire having a wire diameter smaller than 1 mm is used as a wire formed of a magneto caloric material, it is possible to secure a contact area of the wire with a heat exchange medium while suppressing a disturbance of a flow of the heat exchange medium in the heat exchanger, and thus to appropriately improve a heat exchange efficiency without causing an increase in size of a device (an increase in size of a magnet).

### BRIEF DESCRIPTION OF DRAWINGS

Fig. 1 is a diagram illustrating an overall configuration of a magnetic heat pump device including a MCM heat exchanger according to an embodiment of the invention and is a diagram illustrating a state where a piston is located at a first position;
Fig. 2 is a diagram illustrating an overall configuration of the magnetic heat pump device including the MCM heat exchanger according to the embodiment of the invention and is a diagram illustrating a state where the piston is located at a second position;
Fig. 3 is an exploded perspective view illustrating a configuration of the MCM heat exchanger according to the embodiment of the invention;
Fig. 4 is a cross-sectional view taken along an extending direction of the MCM heat exchanger according to the embodiment of the invention;
Fig. 5 is a cross-sectional view taken along a line V-V of Fig. 4;
Fig. 6 is an enlarged view of a plurality of stranded wires filled in the MCM heat exchanger according to the embodiment of the invention;
Fig. 7 is a cross-sectional view of an MCM heat exchanger according to another embodiment;
Fig. 8 is a cross-sectional view of the MCM heat exchanger according to another embodiment;
Fig. 9 is a diagram illustrating a test device used in Example and Comparative Example;
Fig. 10 is a graph illustrating a relation between a cycle frequency (Hz) and an output density (W/kg) of Examples 1 to 3 and Comparative Examples 1 and 2; and
Fig. 11 is a graph illustrating a relation between a contact area (m²) of the fluid medium and an average flow rate (m/sec) of a fluid medium of Reference Examples 1 to 3.

### MODE(S) FOR CARRYING OUT THE INVENTION

Hereinafter, an embodiment of the invention will be described with reference to the drawings.

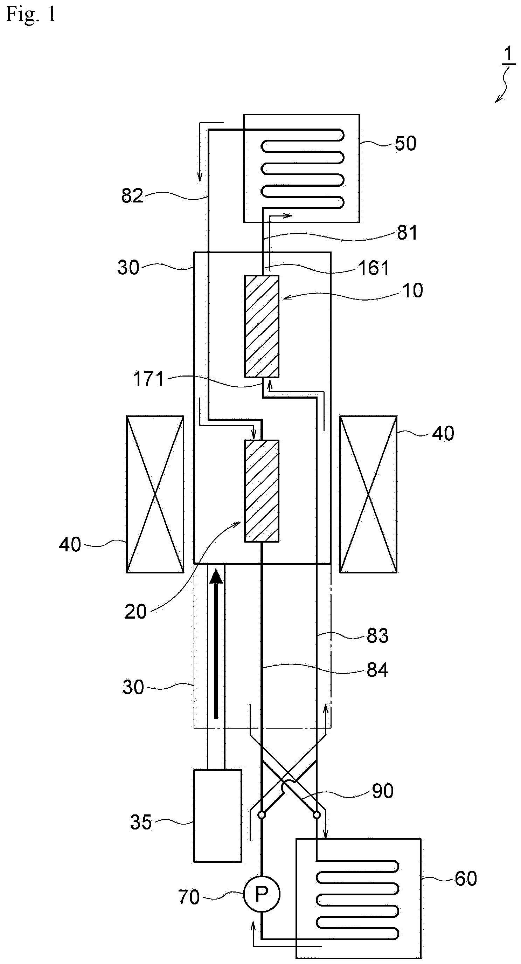

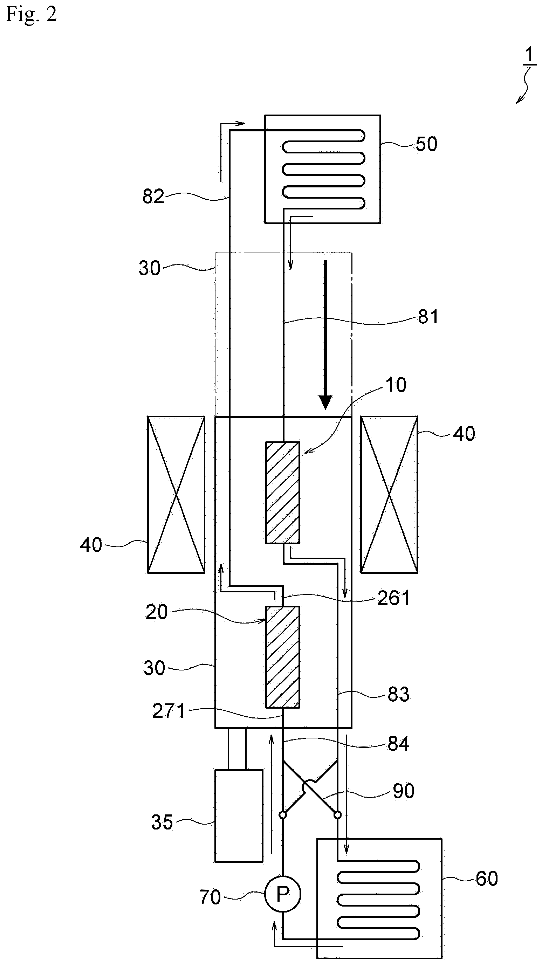

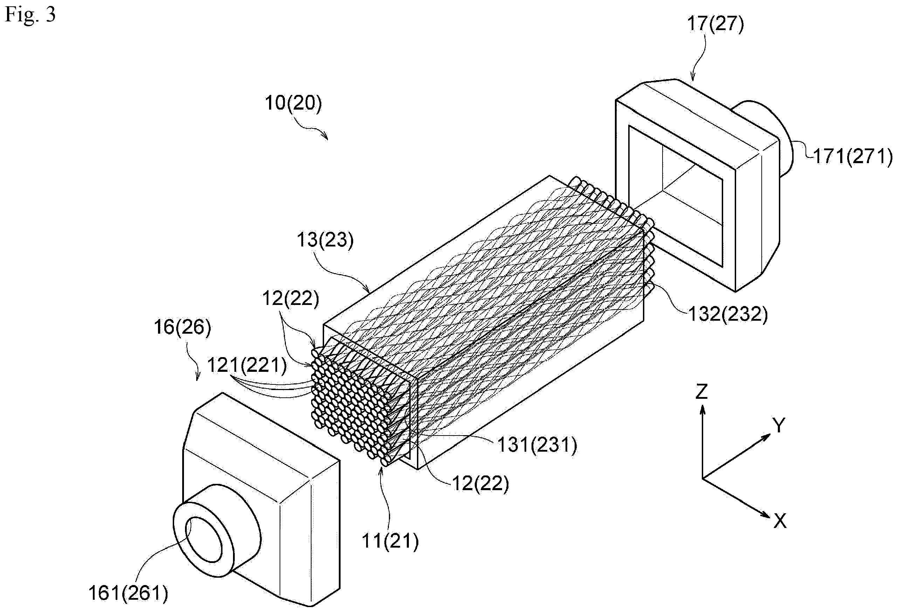

Figs. 1 and 2 are diagrams illustrating an overall configuration of a magnetic heat pump device 1 including first and second MCM heat exchangers 10 and 20 according to an embodiment of the invention. Figs. 3 to 6 are diagrams illustrating the first and second MCM heat exchangers 10 and 20 of this embodiment.

A magnetic heat pump device 1 of this embodiment is a heat pump device using a magneto caloric effect and includes, as illustrated in Figs. 1 and 2, first and second MCM heat exchangers 10 and 20, a piston 30, a permanent magnet 40, a low temperature side heat exchanger 50, a high temperature side heat exchanger 60, a pump 70, pipes 81 to 84, and a switching valve 90.

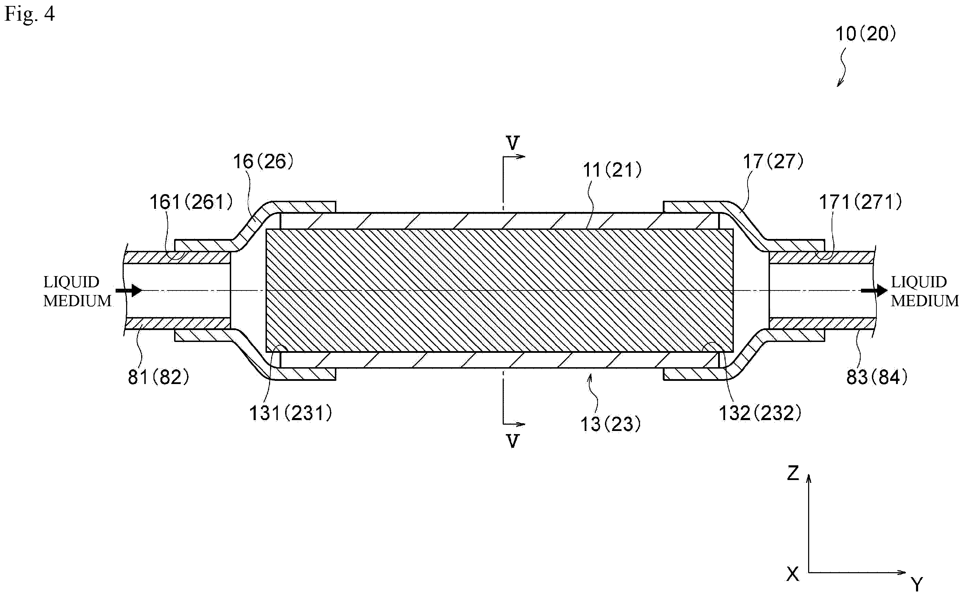

As illustrated in Figs. 3 and 4, the first MCM heat exchanger 10 includes an assembly 11 which is obtained from a bundle of a plurality of stranded wires (child stranded wires) 12, a case 13 which accommodates the assembly 11, and a first adapter 16 and a second adapter 17 which are connected to the case 13, and a plurality of the stranded wires 12 are filled in the case 13.

Since the first MCM heat exchanger 10 and the second MCM heat exchanger 20 have the same configuration, only the configuration of the first MCM heat exchanger 10 will be described below, the configuration of the second MCM heat exchanger 20 will be omitted, and a description of the configuration of the first MCM heat exchanger 10 is used for reference. Further, Figs. 3 to 6 illustrate the first MCM heat exchanger 10. For the second MCM heat exchanger 20, corresponding reference numerals are added in parenthesis and a description thereof is omitted.

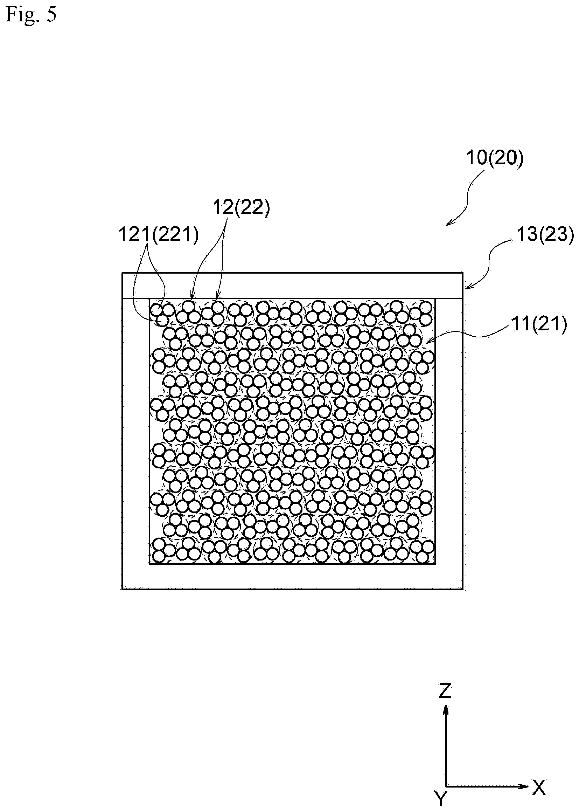

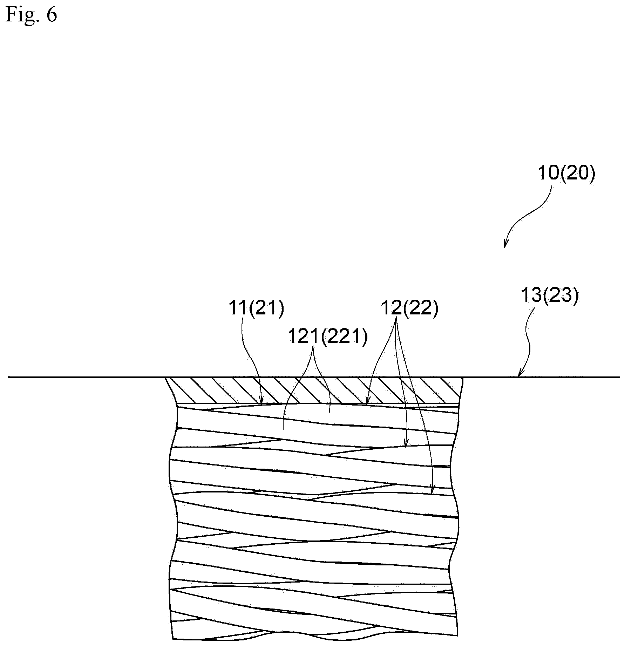

As illustrated in Figs. 5 and 6, the stranded wire 12 is formed by at least two (for example, three in Fig. 5) twisted wires 121. The wire 121 is a linear magnetic body having a circular cross-sectional shape and composed of a magnetocaloric material (MCM) having a magnetocaloric effect. When a magnetic field is applied to the wire 121 formed of MCM, magnetic entropy decreases as electron spins are aligned and the wire 121 generates heat so that a temperature rises. On the other hand, when the magnetic field is removed from the wire 121, the magnetic entropy increases as the electron spins become cluttered and the wire 121 absorbs heat so that a temperature falls.

The MCM forming the wire 121 is not particularly limited as long as it is a magnetic body. However, a magnetic body having a high magnetocaloric effect, for example, in a normal temperature range is desirable. Detailed examples of such MCMs include gadolinium (Gd), gadolinium alloy, lanthanum-iron-silicon (La-Fe-Si) based compounds, and the like.

Further, in this embodiment, a wire having a wire diameter (a diameter in a plane orthogonal to the longitudinal direction) smaller than 1 mm is used as the wire 121. The wire diameter of the wire 121 is desirably equal to or larger than 0.1 mm and smaller than 1 mm and more desirably equal to or larger than 0.1 mm and equal to or smaller than 0.5 mm. Since the first MCM heat exchanger 10 includes the plurality of wires 121, when the plurality of wires 121 have different wire diameters due to a manufacturing error or the like, it is sufficient that an average value of the wire diameters of the plurality of wires 121 constituting the first MCM heat exchanger 10 is within the above-described range.

According to this embodiment, since a wire having a wire diameter smaller than 1 mm is used as the wire 121, it is possible to increase the surface area of the wire 121 while having a satisfactory flow of the liquid medium in the first MCM heat exchanger 10 and thus to improve the heat exchange efficiency by the first MCM heat exchanger 10. The lower limit of the wire diameter of the wire 121 is not particularly limited, but is desirably 0.1 mm or more. If the wire diameter of the wire 121 is smaller than 0.1 mm, the flow of the liquid medium is disturbed, and consequently the heat exchange efficiency may be deteriorated.

As the stranded wire 12, it is desirable to use a stranded wire obtained by twisting two to four wires 121 from the viewpoint of appropriately securing the liquid medium passage, but a stranded wire obtained by twisting four or more wires 121 may be used. As a direction of twisting at least two wires 121, a clockwise rotation direction or a counter-clockwise rotation direction may be used.

The assembly 11 may be formed by a bundle of the plurality of mutually juxtaposed stranded wires 12 or may be obtained by twisting the plurality of stranded wires 12. As a method of twisting the plurality of stranded wires 12 of the assembly 11, collective wiring, concentric twisting, and the like can be exemplified. The collective twisting is a twisting method in which the plurality of stranded wires 12 are bundled together and twisted about the axis of the bundle. The concentric twisting is a twisting method in which one or the plurality of stranded wires 12 are twisted to one stranded wire 12. The twisting direction of the plurality of stranded wires 12 may be a clockwise rotation direction or a counter-clockwise rotation direction.

In the assembly 11 obtained by bundling the stranded wires 12, a passage is formed between the side surfaces of the adjacent stranded wires 12. In order to facilitate understanding, Figs. 3 and 5 illustrate the assembly 11 having a smaller number of stranded wires 12 than the actual number, but in fact, the assembly 11 has more than several hundred stranded wires 12.

As illustrated in Figs. 3 to 5, the assembly 11 is inserted through the case 13. The case (casing) 13 is formed in a rectangular tubular shape. A first opening 131 and a second opening 132 are respectively formed at one end and the other end of the case 13 in the axial direction. The stranded wire 12 linearly extends and the extending direction of the stranded wire 12 matches the axial direction of the case 13. Further, the centers of the first and second openings 131 and 132 are located to be coaxial to the center of the assembly 11.

As illustrated in Fig. 3, the first adapter 16 is connected to the first opening 131 of the case 13 and the second adapter 17 is connected to the second opening 132. As the first and second adapters 16 and 17, for example, a heat shrinkable tube, a resin molded product, a metal processed product, or the like can be used.

The first adapter 16 has a first connection port 161 formed at a position opposite to the connection side with the first opening 131. The first connection port 161 communicates with the low temperature side heat exchanger 50 through the first low temperature side pipe 81. The second adapter 17 also has a second connection port 171 formed at a position opposite to the connection side with the second opening 132. The second connection port 171 communicates with the high temperature side heat exchanger 60 through the first high temperature side pipe 83. The centers of the first and second connection ports 161 and 171 are located to be coaxial to the center of the assembly 11.

Similarly, an assembly 21 obtained by bundling a plurality of stranded wires 22 is also accommodated in a case 23 of the second MCM heat exchanger 20 and the plurality of stranded wires 22 are filled in the case 23. Then, similarly to the first MCM heat exchanger 10, a third adapter 26 is connected to a third opening 231 of the case 23 and a fourth adapter 27 is connected to a fourth opening 232 of the case 23. The second MCM heat exchanger 20 communicates with the low temperature side heat exchanger 50 through the second low temperature side pipe 82 connected to a third connection port 261 of the third adapter 26. Meanwhile, the second MCM heat exchanger 20 communicates with the high temperature side heat exchanger 60 through the second high temperature side pipe 84 connected to a fourth connection port 271 of the fourth adapter 27.

In this embodiment, a wire 221 of the second MCM heat exchanger 20 has the same configuration as the wire 121 of the first MCM heat exchanger 10 and has the same wire diameter. Further, the stranded wire 22 of the second MCM heat exchanger 20 has the same configuration as the stranded wire 12 of the first MCM heat exchanger 10. Further, the assembly 21 formed of the stranded wire 22 of the second MCM heat exchanger 20 has the same configuration as the assembly 11 formed of the stranded wire 12 of the first MCM heat exchanger 10. Furthermore, the case 23 of the second MCM heat exchanger 20 has the same configuration as the case 13 of the first MCM heat exchanger 10.

For example, as illustrated in Figs. 1 and 2, in a case where an air conditioner using the magnetic heat pump device 1 of this embodiment is operated in a cooling mode, an indoor place is cooled by a heat exchange between the low temperature side heat exchanger 50 and the inside air, and heat is emitted to an outdoor place by a heat exchange between the high temperature side heat exchanger 60 and the outside air.

On the contrary, in a case where the air conditioner is operated in a warming mode, the indoor place is warmed by a heat exchange between the high temperature side heat exchanger 60 and the inside air, and heat is absorbed from the outdoor place by a heat exchange between the low temperature side heat exchanger 50 and the outside air.

As described above, a circulation path including four MCM heat exchangers 10, 20, 50, and 60 is formed by two low temperature side pipes 81 and 82 and two high temperature side pipes 83 and 84, and a liquid medium is pressure-fed in the circulation path by the pump 70. As a detailed example of the liquid medium, for example, a liquid such as water, an antifreeze solution, an ethanol solution, or a mixture thereof can be exemplified.

The first and second MCM heat exchangers 10 and 20 are accommodated in the piston 30. The piston 30 can move in a reciprocating manner between a pair of permanent magnets 40 by the actuator 35. Specifically, the piston 30 can move in a reciprocating manner between a "first position" illustrated in Fig. 1 and a "second position" illustrated in Fig. 2. As an example of the actuator 35, for example, an air cylinder or the like can be exemplified.

Here, the "first position" is a position of the piston 30 when the first MCM heat exchanger 10 is not interposed between the permanent magnets 40 and the second MCM heat exchanger 20 is interposed between the permanent magnets 40. On the contrary, the "second position" is a position of the piston 30 when the first MCM heat exchanger 10 is interposed between the permanent magnets 40 and the second MCM heat exchanger 20 is not interposed between the permanent magnets 40.

Instead of the first and second MCM heat exchangers 10 and 20, the permanent magnet 40 may be moved in a reciprocating manner by the actuator 35. Alternatively, an electromagnet having a coil may be used instead of the permanent magnet 40. In this case, a mechanism of moving the MCM heat exchangers 10 and 20 or the magnet is not necessary. Further, when the electromagnet having the coil is used, the magnitude of the magnetic field applied to the wires 121 and 221 may be changed instead of applying/removing of the magnetic field with respect to the wires 121 and 221 of the MCM heat exchangers 10 and 20.

The switching valve 90 is provided at the first high temperature side pipe 83 and the second high temperature side pipe 84. In synchronization with the operation of the piston 30, the switching valve 90 can switch the liquid medium supply destination of the pump 70 to the first MCM heat exchanger 10 or the second MCM heat exchanger 20 and switch the connection destination of the high temperature side heat exchanger 60 to the second MCM heat exchanger 20 or the first MCM heat exchanger 10.

Next, an operation of the magnetic heat pump device 1 of this embodiment will be described.

First, when the piston 30 is moved to the "first position" illustrated in Fig. 1, the wire 121 of the first MCM heat exchanger 10 is demagnetized so that the temperature falls, and the wire 221 of the second MCM heat exchanger 20 is magnetized so that the temperature rises.

At the same time, a first path (the pump 70 → the first high temperature side pipe 83 → the first MCM heat exchanger 10 → the first low temperature side pipe 81 → the low temperature side heat exchanger 50 → the second low temperature side pipe 82 → the second MCM heat exchanger 20 → the second high temperature side pipe 84 → the high temperature side heat exchanger 60 → the pump 70) is formed by the switching valve 90.

For this reason, the liquid medium is cooled by the wire 121 of the first MCM heat exchanger 10 of which a temperature decreases due to a demagnetization and the liquid medium is supplied to the low temperature side heat exchanger 50 so that the low temperature side heat exchanger 50 is cooled.

Meanwhile, the liquid medium is heated by the wire 221 of the second MCM heat exchanger 20 of which a temperature increases due to a magnetization and the liquid medium is supplied to the high temperature side heat exchanger 60 so that the high temperature side heat exchanger 60 is heated.

Next, when the piston 30 is moved to the "second position" illustrated in Fig. 2, the wire 121 of the first MCM heat exchanger 10 is magnetized so that its temperature rises and the wire 221 of the second MCM heat exchanger 20 is demagnetized so that its temperature falls.

At the same time, a second path (the pump 70 → the second high temperature side pipe 84 → the second MCM heat exchanger 20 → the second low temperature side pipe 82 → the low temperature side heat exchanger 50 → the first low temperature side pipe 81 → the first MCM heat exchanger 10 → the first high temperature side pipe 83 → the high temperature side heat exchanger 60 → the pump 70) is formed by the switching valve 90.

For this reason, the liquid medium is cooled by the wire 221 of the second MCM heat exchanger 20 of which a temperature decreases due to a demagnetization and the liquid medium is supplied to the low temperature side heat exchanger 50 so that the low temperature side heat exchanger 50 is cooled.

Meanwhile, the liquid medium is heated by the wire 121 of the first MCM heat exchanger 10 of which a temperature increases due to a magnetization, and the liquid medium is supplied to the high temperature side heat exchanger 60 so that the high temperature side heat exchanger 60 is heated.

Then, when applying and removing of the magnetic field with respect to the wires 121 and 221 inside the first and second MCM heat exchangers 10 and 20 are repeated by the repeated reciprocating movement of the piston 30 between the "first position" and the "second position", the cooling of the low temperature side heat exchanger 50 and the heating of the high temperature side heat exchanger 60 are continued.

According to this embodiment, since a wire having a wire diameter smaller than 1 mm is used as the wires 121 and 221 of the MCM heat exchangers 10 and 20, it is possible to increase the surface area of the wire 121 while having a satisfactory flow of the liquid medium. Accordingly, it is possible to improve the heat exchange efficiency of the wires 121 and 221 of the MCM heat exchangers 10 and 20.

Particularly, the magnetic heat pump device 1 of this embodiment exchanges heat by repeating the application and the removal of the magnetic field for the wires 121 and 221 inside the first and second MCM heat exchangers 10 and 20 in accordance with the above-described reciprocating movement of the piston 30 between the "first position" and the "second position." For that reason, when such a reciprocating movement speed, that is, the cycle frequency (the number of times of the reciprocating movement per unit time) is increased, improvement in the heat exchange efficiency can be expected. Meanwhile, when the granular magnetocaloric effect material is used as the magnetocaloric material having the magnetocaloric effect, the flow of the liquid fluid corresponding to the heat exchange medium is disturbed. For this reason, even when the cycle frequency is increased, there is a limitation of improvement in the heat exchange efficiency. That is, if the cycle frequency is increased when the granular magnetocaloric material is used, the liquid fluid cannot follow the increased cycle frequency and thus an effect obtained by the increased cycle frequency cannot be obtained. In addition, when the granular magnetocaloric material is used, a method of using a large particle diameter so as not to disturb the flow of the liquid fluid can be also supposed. However, since the surface area of the granular magnetocaloric material decreases, the heat exchange efficiency between the magnetocaloric material and the fluid medium decreases.

On the contrary, according to this embodiment, since a wire having a wire diameter smaller than 1 mm is used as the wires 121 and 221 of the MCM heat exchangers 10 and 20, it is possible to increase the surface areas of the wires 121 and 221 while having a satisfactory flow of the liquid medium. Accordingly, even when the cycle frequency is increased, the liquid medium can appropriately follow the increased cycle frequency. As a result, it is possible to appropriately realize improvement in the heat exchange efficiency by increasing the cycle frequency. In particular, according to this embodiment, since it is possible to appropriately improve the heat exchange efficiency by increasing the cycle frequency, the heat exchange efficiency can be improved even when a method of increasing the strength of the magnetic field by increasing the size of the magnet is not used. That is, according to this embodiment, it is possible to appropriately increase the heat exchange efficiency without increasing the size of the device.

The above-described embodiment is used to facilitate the understanding of the invention and does not limit the invention. Thus, the components disclosed in the above-described embodiment include all modifications in design and equivalents belonging to the technical scope of the invention.

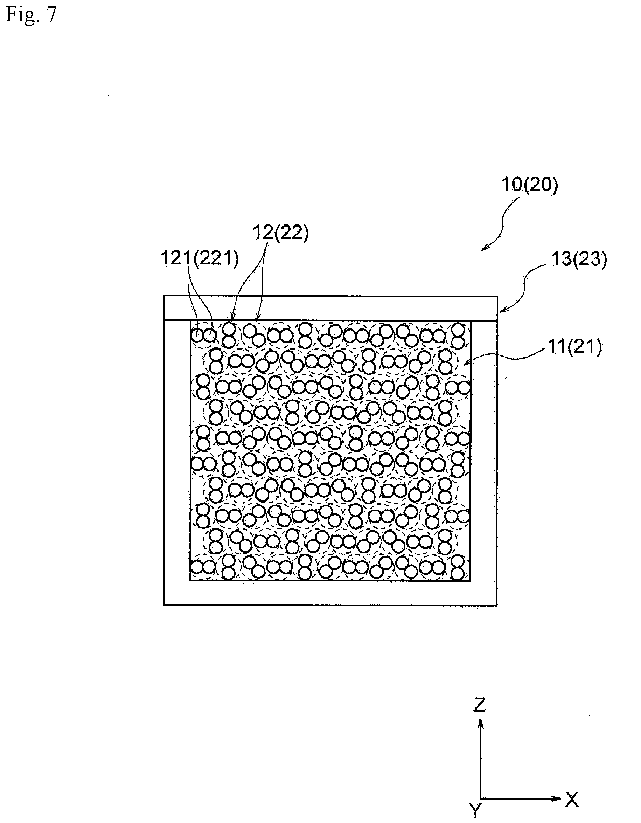

For example, in the above-described embodiment, the stranded wire 12 obtained by twisting three wires 121 is used, but as illustrated in Fig. 7, the stranded wire 12 may be obtained by twisting two wires 121 or the stranded wire 12 may be obtained by twisting four wires 121. Here, in a case where the stranded wire 12 is obtained by twisting five and six wires 121 and the wires 121 are twisted so that the outer periphery of the stranded wire 12 has a circular shape, a gap formed inside the stranded wire 12 becomes larger and thus a shape of the stranded wire 12 is easily collapsed. Further, in a case where the stranded wire 12 is formed by twisting seven or more wires 121, six wires 121 are twisted to the periphery of one wire 121 and thus an effect of securing the liquid medium passage is decreased. On the contrary, in a case where the stranded wire 12 is formed by twisting two to four wires 121, a gap formed inside the stranded wire 12 becomes smaller. Accordingly, it is possible to easily twist the wires 121 and to suppress the collapse of the shape of the stranded wire 12. Further, the effect of securing the liquid medium passage is increased.

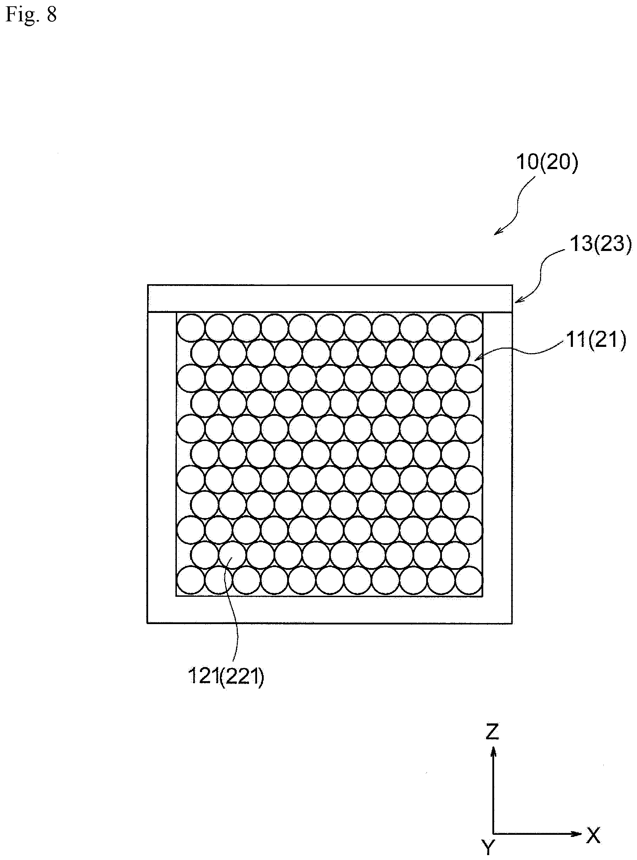

Further, in the above-described embodiment, the stranded wire 12 obtained by twisting wires is used as the wire 121. However, as illustrated in Fig. 8, a non-twisted single wire 121 may be used as the wire 121 and the assembly 11 of the single wire 121 may be inserted through the case 13.

Further, in the above-described embodiment, a rectangular tubular case is used as the case 13, but the invention is not limited to the rectangular tubular shape. For example, a cylindrical shape may be used.

Further, the configuration of the magnetic heat pump device is an example and the heat exchanger manufactured according to the manufacturing method of the invention may be applied to another magnetic heat pump device such as an AMR (Active Magnetic Refrigeration) type.

### Examples

Hereinafter, the invention will be described in more detail with reference to Examples together with Comparative Examples and Reference Examples, but the invention is not limited to Examples.

### <Examples and Comparative Examples>

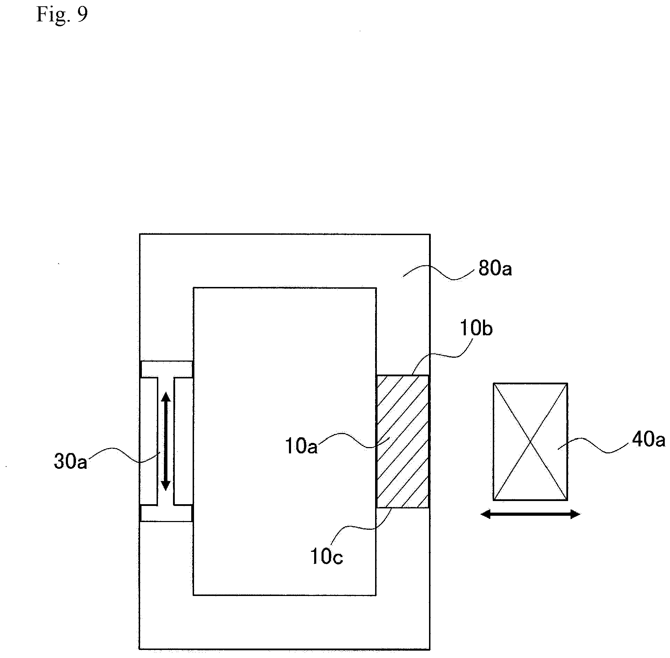

In Examples and Comparative Examples, an evaluation was performed by using a test device illustrated in Fig. 9. The test device illustrated in Fig. 9 includes an MCM heat exchanger 10a, an annular passage 80a connected to both ends of the MCM heat exchanger 10a, a piston 30a provided inside the passage 80a, and a permanent magnet 40a.

In the test device, the MCM heat exchanger 10a includes a rectangular tubular case having an inner diameter of 14 mm × 14 mm and a length of 100 mm and serves as a MCM heat exchanger by filling a magnetic material according to Examples and Comparative Examples into the case. The permanent magnet 40a is movable close to and away from the MCM heat exchanger 10a while moving in a reciprocating manner in a direction indicated by an arrow in the drawing. Further, since the passage 80a is filled with water which is a fluid medium, when the piston 30a moves in a reciprocating manner in a direction indicated by an arrow, the water corresponding to the fluid medium can be alternately supplied from a high temperature side supply port 10b and a low temperature side supply port 10c to the MCM heat exchanger 10a.

Then, in the test device, when the permanent magnet 40a and the piston 30a move in synchronization in a reciprocating manner in a direction indicated by the arrow in the drawing, the magnetization and the demagnetization of the magnetic material provided in the MCM heat exchanger 10a are performed, and the alternate supply of the water corresponding to the fluid medium from the high temperature side supply port 10b and the low temperature side supply port 10c to the MCM heat exchanger 10a are performed.

Hereinafter, Examples and Comparative Examples using a test device illustrated in Fig. 9 will be described.

### <Example 1>

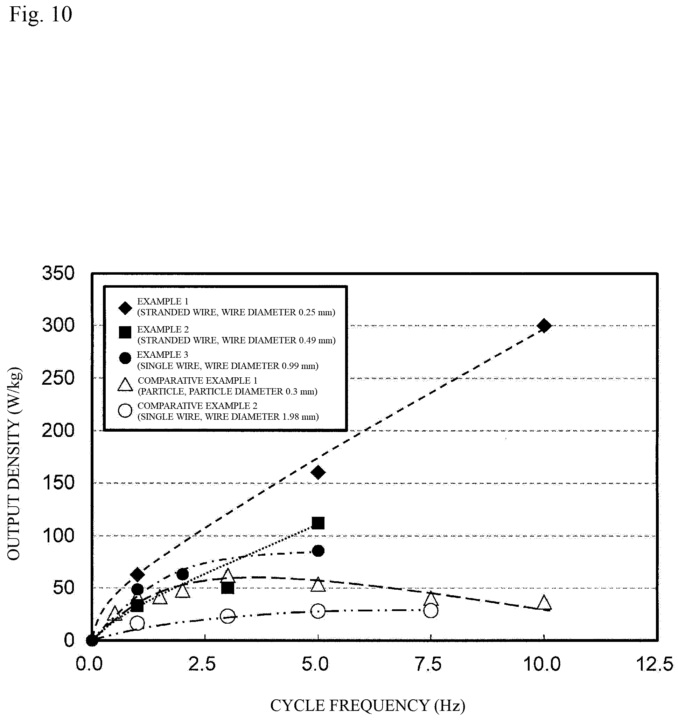

In Example 1, a stranded wire obtained by twisting three wires of gadolinium (Gd) was used as a magnetic material. Specifically, a bundle of the stranded wire filled in a rectangular tubular case having an inner diameter of 14 mm × 14 mm and a length of 100 mm as illustrated in Fig. 5 was set as the MCM heat exchanger 10a, and an output density (an output per unit weight of the magnetic material) was measured by using the test device illustrated in Fig. 9. In Example 1, wires having an average wire diameter of 0.25 mm were used as the plurality of wires formed of gadolinium (Gd) and filled in the MCM heat exchanger 10a. In Example 1, the wire filling rate in the case was 58%. Here, the filling rate was calculated based on the number of the plurality of wires filled in the case, the average wire diameter, and the inner volume of the case (the same applied to Examples 2 and 3, Comparative Examples 1 and 2, and Reference Examples 1 to 3, but the average particle diameter was used instead of the average wire diameter in Comparative Example 1 and Reference Example 3). Further, in Example 1, the output density was measured in a condition that the cycle frequency (the number of times of moving the permanent magnet 40a and the piston 30a in a reciprocating manner per one second) was 1 Hz, 5 Hz, and 10 Hz. The result is illustrated in Fig. 10.

In Examples, Comparative Examples, and Reference Examples, the wire diameters of the used wires were described by the average value thereof, that is, the average wire diameter thereof, but the wires used in Examples, Comparative Examples, and Reference Examples only included a variation in wire diameter due to a manufacturing error.

### <Example 2>

In Example 2, an output density was measured as in Example 1 except that a stranded wire obtained by twisting three wires formed of gadolinium (Gd) was used as a magnetic material and a bundle thereof filled in a rectangular tubular case having an inner diameter of 14 mm × 14 mm and a length of 100 mm was used as the MCM heat exchanger 10a. In Example 2, wires having an average wire diameter of 0.49 mm were used as the plurality of wires formed of gadolinium (Gd) and filled in the MCM heat exchanger 10a. The wire filling rate in the case of Example 2 was 58%. Further, in Example 2, the output density was measured in a condition that the cycle frequency was 1 Hz, 3 Hz, and 5 Hz. The result is illustrated in Fig. 10.

### <Example 3>

In Example 3, an output density was measured as in Example 1 except that a bundle of wires formed of gadolinium (Gd) was used as a magnetic material (that is, a shape illustrated in Fig. 8) and the bundle filled in a rectangular tubular case having an inner diameter of 14 mm × 14 mm and a length of 100 mm was used as the MCM heat exchanger 10a. In Example 3, wires having an average wire diameter of 0.99 mm were used as the plurality of wires formed of gadolinium (Gd) and filled in the MCM heat exchanger 10a. In Example 3, the wire filling rate in the case was 79%. Further, in Example 3, the output density was measured in a condition that the cycle frequency was 1 Hz, 2 Hz, and 5 Hz. The result is illustrated in Fig. 10.

### <Comparative Example 1>

In Comparative Example 1, an output density was measured as in Example 1 except that particles having an average particle diameter of 0.3 mm and formed of gadolinium (Gd) were used as a magnetic material and the particles filled in a rectangular tubular case having an inner diameter of 14 mm × 14 mm and a length of 100 mm were used as the MCM heat exchanger 10a. In Comparative Example 1, the particle filling rate in the case was 60%. Further, in Comparative Example 1, the output density was measured in a condition that the cycle frequency was 0.5 Hz, 1 Hz, 1.5 Hz, 2 Hz, 3 Hz, 5 Hz, 7.5 Hz, and 10 Hz. The result is illustrated in Fig. 10.

### <Comparative Example 2>

In Comparative Example 2, an output density was measured as in Example 1 except that a bundle of wires formed of gadolinium (Gd) was used as a magnetic material (that is, a shape illustrated in Fig. 8) and the bundle filled in a rectangular tubular case having an inner diameter of 14 mm × 14 mm and a length of 100 mm was used as the MCM heat exchanger 10a. In Example 3, wires having an average wire diameter of 1.98 mm were used as the plurality of wires formed of gadolinium (Gd) and filled in the MCM heat exchanger 10a. In Comparative Example 2, the wire filling rate in the case was 79%. Further, in Comparative Example 2, the output density was measured in a condition that the cycle frequency was 1 Hz, 3 Hz, 5 Hz, and 7.5 Hz. The result is illustrated in Fig. 10.

### <Evaluation of Examples and Comparative Examples>

Fig. 10 is a graph illustrating a relation between a cycle frequency (Hz) and an output density (W/kg) of Examples 1 to 3 and Comparative Examples 1 and 2. As illustrated in Fig. 10, in Examples 1 to 3 in which the wires having a wire diameter (an average wire diameter) smaller than 1 mm are used as the magnetic material, it is observed that the equal or higher output density can be obtained at any cycle frequency in comparison with Comparative Example 1 in which the granular magnetic material is used and Comparative Example 2 in which the wires having an wire diameter (an average wire diameter) of 1 mm or more are used.

Particularly, when the cycle frequency is set to be 5 Hz or more, there is a tendency that the output density decreases regardless of the high cycle frequency in Comparative Example 1 in which the granular magnetic material is used. Meanwhile, in Examples 1 to 3 in which the wires having a wire diameter (an average wire diameter) smaller than 1 mm are used as the magnetic material, it is observed that the output density is improved even when the cycle frequency is increased to 5 Hz or more. That is, it is observed that the heat exchange efficiency can be appropriately improved at a high cycle frequency by using the wires having a wire diameter (an average wire diameter) smaller than 1 mm from the result of Examples 1 to 3.

### <Reference Examples>

In Reference Examples, an average flow rate (m/sec) of water corresponding to a fluid medium was measured by the test device illustrated in Fig. 9 when water corresponding to the fluid medium flowed at a discharge pressure of 0.03 MPa of a pump in the MCM heat exchanger 10a.

### <Reference Example 1>

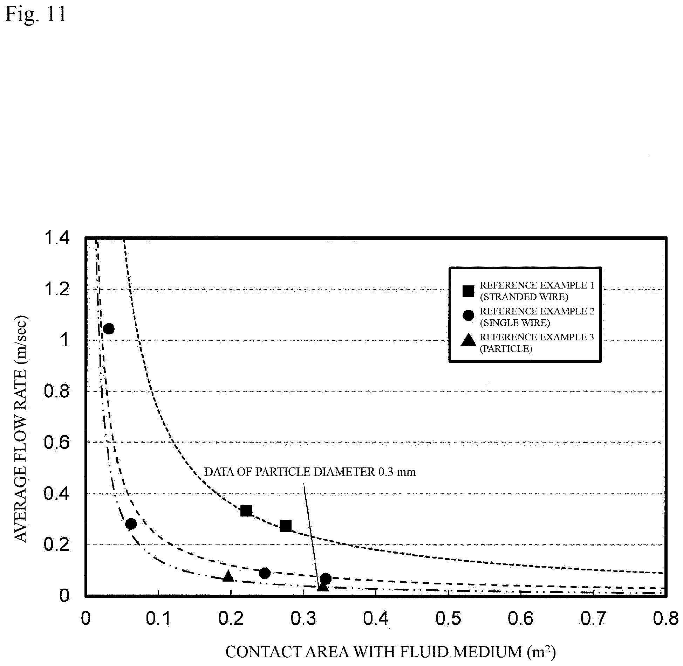

In Reference Example 1, a stranded wire obtained by twisting three wires formed of copper (Cu) was used and a bundle of the stranded wire having a shape illustrated in Fig. 5 and filled in a rectangular tubular case having an inner diameter of 14 mm × 14 mm and a length of 100 mm was used as the MCM heat exchanger 10a. Then, an average flow rate of water corresponding to a fluid medium was measured. In Reference Example 1, two kinds of wires having an average wire diameter of 0.18 mm (a contact area with the fluid medium: 0.28 m² and a filling rate in the case: 58%) and having an average wire diameter of 0.25 mm (a contact area with the fluid medium: 0.22 m² and a filling rate in the case: 58%) were used as the plurality of wires formed of copper (Cu) and were evaluated. The contact area with the fluid medium was calculated based on the inner volume of the case and the average wire diameter of the wires (the same applied to Reference Examples 2 and 3, and the average particle diameter was used instead of the average wire diameter in Reference Example 3). The result is illustrated in Fig. 11.

### <Reference Example 2>

In Reference Example 2, a bundle of wires formed of copper (Cu) was used and the bundle filled in a rectangular tubular case having an inner diameter of 14 mm × 14 mm and a length of 100 mm in a shape illustrated in Fig. 8 was used as the MCM heat exchanger 10a. Then, an average flow rate of water corresponding to a fluid medium was measured. In Reference Example 2, four kinds of wires having an average wire diameter of 0.18 mm (a contact area with the fluid medium: 0.33 m² and a filling rate in the case: 79%), an average wire diameter of 0.25 mm (a contact area with the fluid medium: 0.25 m² and a filling rate in the case: 79%), an average wire diameter of 1.0 mm (a contact area with the fluid medium: 0.06 m² and a filling rate in the case: 79%), and an average wire diameter of 2.0 mm (a contact area with the fluid medium: 0.03 m² and a filling rate in the case: 79%) were used as the plurality of wires formed of copper (Cu) and were evaluated. The result is illustrated in Fig. 11.

### <Reference Example 3>

In Reference Example 3, particles formed of gadolinium (Gd) were used and the particles filled in a rectangular tubular case having an inner diameter of 14 mm × 14 mm and a length of 100 mm were used as the MCM heat exchanger 10a. Then, an average flow rate of water corresponding to a fluid medium was measured. In Reference Example 3, two kinds of particles having an average particle diameter of 0.3 mm (a contact area with the fluid medium: 0.33 m² and a filling rate in the case: 60%) and an average particle diameter of 0.5 mm (a contact area with the fluid medium: 0.19 m² and a filling rate in the case: 60%) were used as particles formed of gadolinium (Gd) and were evaluated. The result is illustrated in Fig. 11.

### <Evaluation of Reference Examples>

Fig. 11 is a graph illustrating a relation between the contact area (m²) of the fluid medium and the average flow rate (m/sec) of the fluid medium of Reference Examples 1 to 3. As illustrated in Fig. 11, according to the result of Reference Example 2, an approximate curve illustrated in Fig. 11 can be obtained by using the Darcy-Weisbach equation. Then, Fig. 11 illustrates approximate curves of Reference Example 1 and Reference Example 3 obtained by applying the approximate curve of Reference Example 2 to Reference Example 1 and Reference Example 3. In this example, the Darcy-Weisbach equation is used, but the same approximate curve can be also obtained by using the Fanning equation or Hagen-Poiseuille equation instead of the Darcy-Weisbach equation.

Here, from the result of Comparative Example 1 described above, when particles formed of gadolinium (Gd) and having an average particle diameter of 0.3 mm are used, the heat exchange efficiency is inferior when the cycle frequency is increased. This is because the fluid medium cannot follow the cycle frequency (the flow rate is not sufficient) if the cycle frequency is increased. Then, as illustrated in Fig. 11, since the average flow rate is about 0.042 m/sec when particles having a particle diameter of 0.3 mm and formed of gadolinium (Gd) are used, if the average flow rate is lower than this flow rate, the heat exchange efficiency may be inferior when the cycle frequency is relatively high.

On the contrary, in the approximate curves of Reference Example 1 and Reference Example 2 illustrated in Fig. 11, particularly, the approximate curves of Reference Example 2, the average flow rate decreases to about 0.042 m/sec when the contact area with the fluid medium is about 0.63 m² and the wire diameter is about 0.098 mm. Accordingly, it is preferable that the lower limit of the wire diameters of the wires 121 and 221 of the MCM heat exchangers 10 and 20 of this embodiment is 0.1 mm or more.

### EXPLANATIONS OF LETTERS OR NUMERALS

- 1:: magnetic heat pump device
- 10:: first MCM heat exchanger
- 11:: assembly
- 12:: stranded wire
- 121:: wire
- 13:: case
- 131:: first opening
- 132:: second opening
- 16:: first adapter
- 161:: first connection port
- 17:: second adapter
- 171:: second connection port
- 20:: second MCM heat exchanger
- 21:: assembly
- 22:: stranded wire
- 221:: wire
- 23:: case
- 231:: third opening
- 232:: fourth opening
- 26:: third adapter
- 261:: third connection port
- 27:: fourth adapter
- 271:: fourth connection port
- 30:: piston
- 35:: actuator
- 40:: permanent magnet
- 50:: low temperature side heat exchanger
- 60:: high temperature side heat exchanger
- 70:: pump
- 81:: first low temperature side pipe
- 82:: second low temperature side pipe
- 83:: first high temperature side pipe
- 84:: second high temperature side pipe
- 90:: switching valve

## Claims

1. A heat exchanger comprising:
wires formed of a magnetocaloric material having a magneto caloric effect; and
a case filled with the wires, wherein
a wire diameter of the wire is smaller than 1 mm.

2. The heat exchanger according to claim 1, wherein
the wire diameter of the wire is equal to or larger than 0.1 mm and smaller than 1 mm.

3. The heat exchanger according to claim 1 or 2, wherein
the wires are twisted and filled in the case as stranded wires.

4. A magnetic heat pump device comprising:
the heat exchanger according to claim 1 or 2.
